# EUROPÄISCHE PATENTSCHRIFT

(11) **EP 0 807 986 B1**
(45) Veröffentlichungstag und Bekanntmachung des Hinweises auf die Patenterteilung: **12.11.2008**
(21) Anmeldenummer: 97107506.4
(22) Anmeldetag: 07.05.1997
(51) Int. Cl.: H01M 6/16

(54) **Fluorhaltige Lösungsmittel für Lithiumbatterien mit erhöhter Sicherheit**
Fluorine-containing solvent for lithium batteries with increased security
Solvant contenant du fluor pour batteries de lithium à sécurité accrue

(30) Priorität: 13.05.1996 DE 19619233
(43) Veröffentlichungstag der Anmeldung: 19.11.1997
(73) Patentinhaber: Solvay Fluor GmbH, 30173 Hannover (DE)
(72) Erfinder: Besenhard, Jürgen Otto, Prof. Dr., 8010 Graz (AT); Von Werner, Konrad, Dr., 84518 Garching (DE); Winter, Martin, Dr., 8055 Neuseiersberg (AT)
(74) Vertreter: Jacques, Philippe

(56) Entgegenhaltungen:
- EP-A- 0 757 399
- DATABASE WPI Section Ch, Week 8925 Derwent Publications Ltd., London, GB; Class E16, AN 89-181258 XP002040070 & JP 01 117 838 A (NEOS KK) , 10.Mai 1989
- BULLETIN DE LA SOCIETE CHIMIQUE DE FRANCE, Nr. 96, 1957, Seiten 581-592, XP002040069 LICHTENBERGER ET AL: "Sur les Additions Nucléophiles au Trifluorchloroéthène (1)"

## Beschreibung

Im Sinne des Umweltschutzes und der Wirtschaftlichkeit ist die Entwicklung auf dem Batteriesektor eindeutig auf wiederaufladbare (sekundäre) Batterien gerichtet. Im wichtigen Sektor der mobilen Elektronik (hochwertige Camcorder, tragbare Computer, Handys und dergleichen) werden den Lithiumionen-Batterien große Chancen gegeben, weil ihre Energiedichte rund doppelt so hoch ist als die der Metallhydridzellen und etwa dreimal höher als die von Nickel/Cadmiumzellen. Ein weiteres interessantes Gebiet ist der Einsatz von sekundären Lithiumionen-Batterien für die Elektrotraktion, beispielsweise für elektrisch betriebene Stadtautos.

Problematisch ist derzeit vor allem der Sicherheitsstandard der wiederaufladbaren Lithiumbatterien, da kritische Betriebszustände wie Überladen, Überentladen oder Kurzschluß, die durchaus zur Öffnung der Zelle unter Feuererscheinung führen können, bisher häufig nur durch elektronische Überwachung vermieden werden.

Nach dem gegenwärtigen Stand der Technik verwendet man in sekundären Lithiumbatterien vor allem organische Lösungsmittel mit stark polarisierend wirkenden Heteroatomen, wie zum Beispiel Stickstoff, Sauerstoff oder Schwefel, zur Herstellung aprotischer Elektrolytlösungen [siehe zum Beispiel O. Popovych, R.P.T. Tomkins, Nonaqueous Solution Chemistry, John Wiley & Sons (1981) oder G.J. Janz, R.P.T. Tomkins, Nonaqueous Elektrolytes Handbook, Vol. I (1972), Vol. II (1973), Academic Press, New York]. Typische Beispiele für solche Lösungsmittel sind Ether (zum Beispiel 1,2-Dimethoxyethan oder Tetrahydrofuran), Ester (zum Beispiel Propylencarbonat), Nitrile (zum Beispiel Acetonitril), aber auch Lactone, Sulfone und viele andere.

Wenig entflammbar beziehungsweise wenig zur Bildung explosiver Gemische neigend sind einige schwerflüchtige, allerdings leider auch hochviskose Lösungsmittel wie Propylencarbonat, Ethylencarbonat oder Sulfolan (Tetramethylensulfon). Aufgrund der hohen Viskosität ist die elektrische Leitfähigkeit der mit diesen Lösungsmitteln hergestellten Elektrolytlösungen insbesondere bei tieferen Temperaturen gering. Außerdem sind neben der Ionenwanderung auch alle anderen Stofftransportvorgänge in solchen Lösungen langsam.

Zum Erzielen hoher Leitfähigkeiten verwendet man in der Technik in der Regel Lösungsmittelgemische, die mindestens eine stark polare Komponente enthalten, welche aufgrund ihrer Polarität auf Salze stark dissoziierend wirkt. Eine orientierende Maßzahl für das Dissoziationsvermögen ist die Dielektrizitätskonstante. Da solche hochpolaren Lösungsmittel, wie zum Beispiel Propylencarbonat oder Ethylencarbonat, deren Dielektrizitätskonstanten mit 67 bei 25 °C beziehungsweise 90 bei 40 °C in etwa der des Wassers (78 bei 25 °C) entsprechen, regelmäßig auch ziemlich hochviskos sind, verwendet man im allgemeinen zusätzlich noch eine oder mehrere niederviskose Komponenten als "Verdünner". Typische Verdünner sind zum Beispiel 1,2-Dimethoxyethan oder Dimethylcarbonat, die allerdings durch sehr kleine Werte für die Dielektrizitätskonstante gekennzeichnet sind (circa 7 für 1,2-Dimethoxyethan und circa 3 für Dimethylcarbonat).

Ein gravierender Nachteil der "Verdünner"-Komponenten besteht in ihrer Flüchtigkeit und dem damit verbundenen Zünd- und Explosionsverhalten bei Luftzutritt. Da elektrochemische Anwendungen von Elektrolytlösungen immer mit Erwärmung durch Stromfluß und beim Auftreten von Fehlern (zum Beispiel Kurzschluß innerhalb oder außerhalb des elektrochemischen Bauteils) auch mit dem Risiko der Zündung verbunden sind, kommt diesem Nachteil eine ganz erhebliche praktische Bedeutung zu. Für 1,2-Dimethoxyethan liegt zum Beispiel der Flammpunkt bei -6 °C und die Explosionsgrenze zwischen 1,6 und 10,4 Vol.-%.

Die wiederaufladbaren Lithiumbatterien enthalten meist eine Verbindung aus Lithium und einem Metalloxid als Kathode (zum Beispiel LiₓMnO₂ oder LiₓCoO₂) und Lithiummetall als Anode, wobei das Lithium bevorzugt als Intercalationsverbindung mit Graphit oder in Kombination mit Kohle- oder Graphitfasern verwendet wird. Ein guter Überblick über- die Entwicklung solcher Batterien wird von K. Brandt gegeben [Solid State Ionics 69 (1994), 173 bis 183, Elsevier Science B.V.].

Zur Erhöhung der Sicherheit können Kathoden- und Anodenraum durch eine mikroporöse Separatormembran getrennt werden, die so beschaffen ist, daß beim Überschreiten einer definierten Grenztemperatur durch Verschmelzen der Poren der Stromfluß selbständig unterbrochen wird. Geeignete Membranen dieser Art sind beispielsweise im ^{®}Celgard-Sortiment der Hoechst Celanese Corporation enthalten. Weiterhin kann durch Überdruckschalter, die zum Beispiel auf Gasentwicklung beim Überladen reagieren, und ganz allgemein durch eine aufwendige Überwachungs- und Steuerungselektronik die Sicherheit von Lithiumbatterien erhöht werden. Ferner wurden auch flammhemmende phosphor- und halogenhaltige Additive empfohlen.

All diese Maßnahmen können jedoch nicht ausschließen, daß beim Auftreten von Defekten die leichtflüchtige Komponente der flüssigen Elektrolytlösungen letztlich doch entflammt und in weiterer Folge zum Beispiel die negative Elektrode entzündet. In diesem Fall entsteht ein mit üblichen Mitteln kaum mehr löschbares Feuer, da zum Beispiel brennendes Lithium nicht nur mit Wasser, sondern auch mit dem in gängigen Feuerlöschern enthaltenen Stoffen (zum Beispiel Kohlendioxid) heftig reagiert.

In früheren Publikationen wurden bereits perfluorierte Ether und Perfluoralkane für das Elektrolytsystem von Lithiumbatterien vorgeschlagen (JP-A 7-249432 und EP-A 631 339). Diese sind zwar im allgemeinen thermisch und chemisch sehr stabil, sie sind jedoch schlecht mischbar mit batterieüblichen Lösungsmitteln. Darüber hinaus besitzen sie generell ein schlechtes Lösevermögen für die gebräuchlichen Lithiumleitsalze.

Aus JP-A 7-249432 ist die Verwendung von teilfluorierten Ethern in Elektrolytlösungen für Lithium-Sekundärbatterien bekannt. Als besonders bevorzugt genannt werden jedoch Ether mit einer relativ niedrigen Molmasse (zum Beispiel 1,1,1,5,5,5-Hexafluor-3-oxa-pentan), welche erfahrungsgemäß folgende Nachteile aufweisen: Hoher Dampfdruck, niedriger Siedepunkt, schlechtes Lösevermögen für Lithiumleitsalze und in der Regel auch sehr niedrige Flammpunkte. Beispielsweise liegen die Flammpunkte der Verbindungen ROCF₂CF₂H (R gleich Methyl oder Ethyl) unter 10 °C und selbst der hochfluorierte Ether der Formel HCF₂CF₂CH₂OCF₂CF₂H weist einen Flammpunkt von nur 22 °C auf. Gemische aus Dimethylcarbonat oder Ethylencarbonat mit 3,3,4,4-Tetrafluor-2,4-dioxa-hexan wurden mit einer 1M-Konzentration verschiedener Lithiumleitsalze in sekundären Lithiumzellen über drei Zyklen getestet und als brauchbar befunden (M. Winter, Dissertationsschrift Technische Universität Graz, "Filmbildung auf Lithium/Kohlenstoff- Intercalationsanoden", September 1995).

Die Herstellung fluorierter Ether wurde bereits im Bulletin de la Societe Chimique de France Nr. 96, 1957, Seite 581-592 beschrieben. Die Eignung dieser Verbindungen als Lösungsmittel für Elektrolytsysteme ist diesem Artikel jedoch nicht zu entnehmen

Aus JP 01-117838 sind Elektolytsysteme, die fluorhaltige aliphatische Ether enthalten, bekannt. Die Herstellung dieser Ether erfolgt durch Umsetzung von fluoriertem Alkohol mit Toluolsulfonsäure, wobei das Reaktionsprodukt mit einem weiteren Alkohol zu dem gewünschten Ether weiter reagiert. Mit diesem Herstellverfahren lassen sich jedoch nur bestimmte teilfluorierte Etherverbindungen herstellen.

Nach dem gegenwärtigen Stand der Technik wird verminderte Entflammbarkeit der Elektrolytlösung vor allem durch Viskositätserhöhung der Elektrolytlösung durch Bindemittel oder Füller beziehungsweise durch die Verwendung bei Raumtemperatur praktisch fester polymerer Elektrolyte erreicht. In US-A 5 169 736 werden zum Beispiel organische oder anorganische Verdickungsmittel (Polyethylenoxid, SiO₂, Al₂O₃ und andere) beschrieben, um flüssige Elektrolytlösungen zu verfestigen. Polymere Elektrolyte auf der Basis von Makromolekülen mit zahlreichen polaren Gruppen wie etwa Polyethylenoxide [siehe zum Beispiel B. Scrosati, Hrsg., 2nd International Symposium on Polymer Electrolytes, Elsevier, London und New York (1990)] sind ebenfalls aufgrund ihrer geringen Flüchtigkeit weitaus schwerer entflammbar. In US-A 5 393 621 werden polymere Elektrolyte beschrieben, deren polare Makromoleküle durch Polymerisation von Organophosphorverbindungen gebildet werden, welche sich durch besonders geringe Entflammbarkeit auszeichnen.

All diesen gelartigen bis festen Elektrolyten ist gemeinsam, daß aufgrund ihrer hohen Viskosität die Beweglichkeit der Ionen der in ihnen gelösten Salze weitaus geringer ist als in flüssigen Elektrolytlösungen, so daß insbesondere bei tieferen Temperaturen zumindest für die meisten technischen Anwendungen nicht mehr die erforderlichen Leitfähigkeiten erreicht werden. Aus diesem Grunde haben zum Beispiel Alkalimetallbatterien mit polymeren Elektrolyten trotz jahrzehntelanger sehr intensiver Forschungstätigkeit noch immer keine wirtschaftliche Bedeutung erlangen können.

Ziel der vorliegenden Erfindung war es, Elektrolytlösungen zu entwickeln, die frei von den obenerwähnten leichtentflammbaren und explosionsfähigen niederviskosen "Verdünnern" sind und somit die Sicherheit der elektrolythaltigen Vorrichtungen erhöhen, aber dennoch ein Viskositäts- und Leitfähigkeitsverhalten zeigen, das ihren praktischen Einsatz selbst bei tiefen Temperaturen möglich macht.

Es bestand somit ein dringender Bedarf für stabile Lösungsmittel für Lithiumzellen, die durch folgende Stoffeigenschaften gekennzeichnet sind:
1. Hohe thermische Stabilität.
2. Hoher Flammpunkt.
3. Niedriger Dampfdruck beziehungsweise hoher Siedepunkt.
4. Niedrige Viskosität.
5. Mischbarkeit mit batterieüblichen Lösungsmitteln, beispielsweise Ethylencarbonat, Propylencarbonat oder α,ω-Dialkyl-glykolethern.
6. Ausreichende Löslichkeit für fluorhaltige Lithiumleitsalze, beispielsweise LiPF₆, LiN(SO₂CF₃)₂ oder LiC(SO₂CF₃)₃.
7. Hohe Stabilität gegenüber metallischem Lithium.
8. Gutes Lösevermögen für Kohlendioxid: CO₂ beschleunigt den Aufbau von Schutzfilmen auf Lithium- oder LiCₙ-Anoden.

Es wurde nun überraschend gefunden, daß bestimmte Gruppen von teilfluorierten, aliphatischen Ethern die unter den Punkten 1 bis 8 genannten Anforderungen gut bis ausgezeichnet erfüllen. Es handelt sich grundsätzlich um Verbindungen, die dadurch gekennzeichnet sind, daß sie Alkylengruppen enthalten, die über Ethersauerstoff mit teilfluorierten Alkylgruppen verknüpft sind, welche außer Fluor noch Wasserstoff, Chlor und Ethersauerstoff enthalten können. Verbindungen im Sinne dieser Definition sind Ether der nachstehenden Formeln (I) und (II)

RO-[(CH₂)ₘO]ₙ-CF₂-CFH-X (I)

worin
- R: eine geradkettige Alkylgruppe mit 1 bis 10 C-Atomen oder eine verzweigte Alkylgruppe mit 3 bis 10 C-Atomen,
- X: Fluor, Chlor oder eine Perfluoralkylgruppe mit 1 bis 6 C-Atomen ist, welche auch Ethersauerstoff enthalten kann,
- m: eine Zahl von 2 bis 6 und
- n: eine Zahl von 1 bis 8 ist,
und

X-CFH-CF₂O-[(CH₂)ₘO]ₙ-CF₂-CFH-X (II)

worin X, m und n die obengenannten Bedeutungen haben.

Gegenstand der Erfindung ist somit ein Elektrolytsystem zur Erhöhung der Sicherheit von Lithiumbatterien, das Verbindungen der Formeln (I) und/oder (II) in einer wirksamen Menge enthält, wobei die Verbindungen mit X Fluor oder Trifluormethyl bevorzugt sind. Besonders bevorzugt sind fluorhaltige Ether der Formel (I), worin R eine Methylgruppe, X Fluor, m 2 und n 1 bis 3 ist, sowie Ether der Formel (II), worin X Fluor, m 2 und n 1 bis 3 ist.

Im allgemeinen werden die Verbindungen mit m gleich 2 bevorzugt, weil sie aus gut zugänglichen und preiswerten Ethylenglykol-monoalkylethern oder Ethylenglykolen hergestellt werden können. Die Verbindungen, in denen X Chlor ist, sind weniger bevorzugt, weil sie bei hohen Temperaturen mit metallischem Lithium unter Abspaltung von Chlor und Fluor unter Bildung der entsprechenden Lithiumhalogenide reagieren können.

Die erfindungsgemäße Lösung des Sicherheitproblems von sekundären Lithiumbatterien wird durch den Einsatz von Verbindungen der Formeln (I) und/oder (II) als wesentliche Komponente des Elektrolytsystems erreicht, wobei man sich ihre überraschend niedrige Viskosität zunutze macht. Die Stoffe gemäß den Formeln (I) und (II) lassen sich als Verdünnungsmittel für schwerentflammbare, hochviskose Komponenten verwenden, beispielsweise Ethylencarbonat und Propylencarbonat. Auf diese Weise lassen sich aprotische Elektrolytsysteme herstellen, die praktisch kaum noch entflammbar sind. Der Gehalt von Ethern der Formeln (I) und/oder (II) beträgt üblicherweise 5 bis 70 Vol.-%, vorzugsweise 20 bis 50 Vol.-%, bezogen auf das Gesamtvolumen des Elektrolytsystems.

Die teilfluorierten Ether gemäß den Formeln (I) und (II) verbessern auch das Lösungsvermögen für unpolare oder wenig polare Gase, insbesondere CO₂, N₂, N₂O, SF₆, SO₂FCl oder SO₂F₂. Diese Gase können vorteilhaft als Schutzgas in Lithiumbatterien eingesetzt werden, da sie einen positiven Effekt auf die an der Grenzfläche negative Elektrode/Elektrolyt ablaufenden Reaktionen haben [siehe zum Beispiel J.O. Besenhard, M.W. Wagner, M. Winter; J. Power Sources, 44 (1993), 413].

Es ist bekannt, daß reaktive Verunreinigungen (zum Beispiel Wasser) schon in sehr geringen Konzentrationen drastische negative Auswirkungen auf die Funktion der Lithiumbatterien haben. In der Praxis sollte die Summe solcher Verunreinigungen 50 ppm auf keinen Fall überschreiten. Ein großer Vorteil der durch die obigen Formeln (I) und (II) definierten Produkte ist, daß sie meist so hohe Siedepunkte haben, daß Wasser und andere reaktive Verunreinigungen leicht durch Destillation vollständig abgetrennt werden können.

Die Viskosität von Mischungen der Ether gemäß den Formeln (I) und (II) mit Propylencarbonat kann durch Zugabe (mindestens) eines niedrigviskosen, weitgehend fluorierten Lösungsmittels aus der Gruppe der Hydro-perfluoralkane oder Hydro-perfluorether gesenkt werden, um auch bei Temperaturen unter 0 °C eine hohe Leitfähigkeit zu garantieren. In solchen Fällen empfiehlt sich die Verwendung besonders leicht dissoziierender Leitsalze mit großen fluorhaltigen Anionen, wie zum Beispiel LiN(SO₂CF₃)₂ oder LiC(SO₂CF₃)₃. Die erfindungsgemäßen teilfluorierten Ether wirken als Phasenvermittler in bezug auf die zugesetzten höher fluorierten Lösungsmittel. Besonders geeignete Mittel zur Erniedrigung der Viskosität sind beispielsweise 1H-Perfluorhexan (kinematische Viskosität bei 20 °C: 0,55 mm²/s, Flammpunkt > 110 °C) und 2,3-Dihydro-perfluor-5-methyl-pentan. Diese Stoffe bilden mit Luft keine explosionsfähigen Gemische. Dies gilt auch für Fluorether der Formel 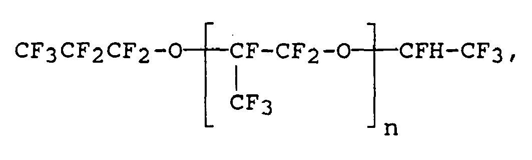 worin n 1 oder 2 ist.

Wie aus Tabelle 3 ersichtlich, neigen die durch die Formeln (I) und (II) beschriebenen Verbindungen oberhalb 200 °C zur thermischen Zersetzung. Es wurde überraschend gefunden, daß sich die teilfluorierten Ether mit sehr geringen Mengen an tertiären, aliphatischen Aminen sehr effektiv stabilisieren lassen. Bereits geringe Zusätze des Amins in der Größenordnung von 0,1 bis 1,0 Gew.-% bezüglich des teilfluorierten Ethers reichen aus, um die Temperatur, bei der sich der Ether zu zersetzen beginnt, um 60 bis 100 °C anzuheben. Das tertiäre Amin soll so hochsiedend sein, daß es auch bei Temperaturen über 100 °C überwiegend in der Flüssigphase verbleibt. Geeignete tertiäre Amine sind beispielsweise Tri-n-butylamin, Tri-n-octylamin oder 1,6-Bis-(dimethylamino)-hexan. Aromatische Amine sind wegen ihrer Tendenz zur anodischen Oxidation weniger geeignet.

Gegenstand unserer Erfindung ist somit auch eine Methode zur Stabilisierung von Verbindungen der Formeln (I) und (II) mit tertiären, aliphatischen Aminen.

### Synthesen von teilfluorierten Ethern:

Primäre Alkohole reagieren mit diversen fluorhaltigen Alkenen basenkatalysiert unter Bildung von teilfluorierten Ethern [siehe Houben-Weyl, Methoden der Organischen Chemie, 4. Auflage, Band VI/3, (1965) 120/121, Georg Thieme Verlag Stuttgart sowie die dort zitierte Literatur]: ROH + F₂C=CFX → RO-CF₂-CFHX, worin R eine primäre Alkylgruppe und X Fluor, Chlor oder Perfluoralkyl (zum Beispiel CF₃) ist.

Die in Tabelle 1 gezeigten Ether mit 1H-Tetrafluorethyl-Gruppen wurden aus den entsprechenden Alkoholen und Tetrafluorethylen synthetisiert (Katalysator: KOH; Solvens: N,N-Dimethylformamid). Nach derselben Methode wurde die Verbindung CH₃O(CH₂)₂OCF₂CFClH mit Chlortrifluorethylen erhalten (Kochpunkt: 146 bis 147 °C, 1013 hPa; GC-Reinheit: 99,4 %).

Bei der Reaktion von Alkoholen mit Hexafluorpropen unter basischen Bedingungen tritt teilweise HF-Abspaltung ein, so daß sich als Nebenprodukte auch Ether der Formel RO-CF=CF-CF₃ (E/Z-Isomere) bilden. Diese Nebenreaktion läßt sich weitgehend unterdrücken, indem man die Reaktion unter hohem Druck durchführt [H. Kokelenberg und R. Pollet, Tenside Detergents 22 (1985), 1]. Nach dieser Methode wurde die Verbindung CF₃CFHCF₂-O(CH₂CH₂O)₂-CF₂CFHCF₃ hergestellt (GC-Reinheit: 98,7 %).

**Tabelle 1**

| Stoffdaten für (1H-Tetrafluorethyl)-ether auf Basis von Glykolmonoalkylethern und Glykolen | | | | | | | | |
|---|---|---|---|---|---|---|---|---|
| Verbindung | GC-Reinheit [Flächen-%] | Dichte bei 24 °C [g/ml] | Siedepunkt [°C/hPa] | Viskosität DIN 51562 kinematisch [mm²/s) | | Flammpunkt [°C] | F-Gehalt (berechnet) [%] | Molmasse (berechnet) [g/mol] |
| | | | | 20 °C | 50 °C | | | |
| CH₃OCH₂CH₂OCF₂CF₂H | 99,4 | 1,25 | 117/970 | 1,12 | 0,68 | 33,5∗) | 43,2 | 176 |
| CH₃CH₂OCH₂CH₂OCF₂CF₂H | 99,3 | 1,20 | 129/970 | 1,18 | 0,74 | 36,5∗) | 40,0 | 190 |
| CH₃O(CH₂CH₂O)₂CF₂CF₂H | 99,8 | 1,24 | 84/22 | 2,71 | 1,35 | 78,0∗) | 34,5 | 220 |
| CH₃O(CH₂CH₂O)₃CF₂CF₂H | 99,4 | 1,22 | 106-107/0,4 | 5,44 | 2,31 | 115,5∗∗) | 28,8 | 264 |
| HCF₂CF₂OCH₂CH₂OCF₂CF₂H | 98,8 | 1,50 | 53/28 | 1,72 | 0,98 | 61,0∗) | 58,0 | 262 |
| HCF₂CF₂O(CH₂CH₂O)₂CF₂CF₂H | 99,1 | 1,43 | 96/18 | 4,09 | 1,86 | 104,0∗∗) | 49,7 | 306 |
| HCF₂CF₂O(CH₂CH₂O)₃CF₂CF₂H | 99,6 | 1,38 | 123/0,4 | 8,51 | 3,20 | 116,0∗∗) | 43,4 | 350 |
| HCF₂CF₂O(CH₂CH₂O)ₙCF₂CF₂H (n = 6,4) | --- | 1,30 | --- | 40,3 | 10,5 | 124,0∗∗) | 30,4 | 500 (M_{w}) |

| | | | | | | | | |
|---|---|---|---|---|---|---|---|---|
| ∗) DIN 55680, Genauigkeit ± 1 °C ∗∗) DIN 51758, Genauigkeit ± 1 °C | | | | | | | | |

**Tabelle 2**

| Sicherheitstests an teilfluorierten Ethern | | | |
|---|---|---|---|
| Testsubstanz | Zündprobe mit brennendem Holzspan | Zustand nach Versuch | Stabilität gegen Lithium∗) |
| CH₃OCF₂CF₂OCH₃ | brennt, gelbe Flamme | Glas angeäzt | keine Reaktion |
| CH₃OCH₂CH₂OCF₂CF₂H | brennt, gelbe Flamme | Glas angeäzt | keine Reaktion |
| CH₃CH₂OCH₂CH₂OCF₂CF₂H | brennt, gelbe Flamme | Glas angeäzt | keine Reaktion |
| CH₃O(CH₂CH₂O)₃CF₂CF₂H | nicht brennbar | --- | keine Reaktion |
| HCF₂CF₂OCH₂CH₂OCF₂CF₂H | nicht brennbar | --- | keine Reaktion |
| HCF₂CF₂O(CH₂CH₂O)₂CF₂CF₂H | nicht brennbar | --- | keine Reaktion |
| HCF₂CF₂O(CH₂CH₂O)₃CF₂CF₂H | nicht brennbar | --- | keine Reaktion |
| CF₃CFHCF₂O(CH₂CH₂O)₂CF₂CFHCF₃ | nicht brennbar | --- | keine Reaktion |
| CH₃OCH₂CH₂OCF₂CFClH | brennt, gelbe Flamme | Glas angeäzt | Dampf-, Rauchbildung |

| | | | |
|---|---|---|---|
| ∗) Versuchsbedingungen: wird Eine Apparatur, bestehend aus einem 20-ml-Quarzglaskölbchen mit aufgesetztem, beheizbarem Tropftrichter, wird im Hochvakuum mit einem Leistungs-Fön^{®} sorgfältig ausgeheizt. Nach Abkühlen und Befüllung mit Argon wird das Kölbchen mit circa 1 g Lithium beschickt, dann der Tropftrichter mit 5 ml der mit Argon gesättigten Testverbindung. Das Lithium wird mit einem Heizbad bei 190 °C geschmolzen und der auf circa 100 °C vorgeheizte Ether langsam zugetropft. Nur der chlorhaltige Ether reagiert mit Lithium, wobei LiCl und LiF entstehen. | | | |

Thermoanalytische Untersuchung der Stabilität von teilfluorierten Ethern:

Die thermische Stabilität von typischen teilfluorierten Ethern wurde mittels DSC (Differential Scanning Calorimetry) untersucht. Die Aufheizrate, beginnend bei 20 °C, betrug 10 °C/min.

**Tabelle 3**

| Substanz | Start der Zersetzung [°C] | Maximum [°C] | Wärmetönung [kJ/mol] |
|---|---|---|---|
| CH₃OCH₂CH₂OCF₂CF₂H | 208 | 226 | -67 |
| CH₃CH₂OCH₂CH₂OCF₂CF₂H | 200 | 220 | -51 |
| CH₃CH₂OCH₂CH₂OCF₂CF₂H + 1 % N(n-C₄H₉)₃ | 282 | 295 | -49 |
| HCF₂CF₂O(CH₂CH₂O)ₙ-CF₂CF₂H, n = 6,4 | 240 | 250 | -75 |
| HCF₂CF₂O(CH₂CH₂O)ₙ-CF₂CF₂H + 1 % N(n-C₄H₉)₃, n = 6,4 | 300 | 315 | -70 |
| CF₃CFHCF₂O(CH₂CH₂O)₂CF₂CFHCF₃ | 210 | 222 | -73 |
| CF₃CFHCF₂O(CH₂CH₂O)₂CF₂CFHCF₃ + 1 % N(n-C₄H₉)₃ | 290 | 303 | -70 |

### Folgerungen:

1. Die thermische Zersetzung der in Tabelle 3 genannten teilfluorierten Ethern verläuft grundsätzlich exotherm.
2. Die teilfluorierten Ether lassen sich durch geringe Mengen eines tertiären Amins effizient stabilisieren.

Leitfähigkeitsmessungen an Elektrolytsystemen, welche einen erfindungsgemäßen Ether enthalten:

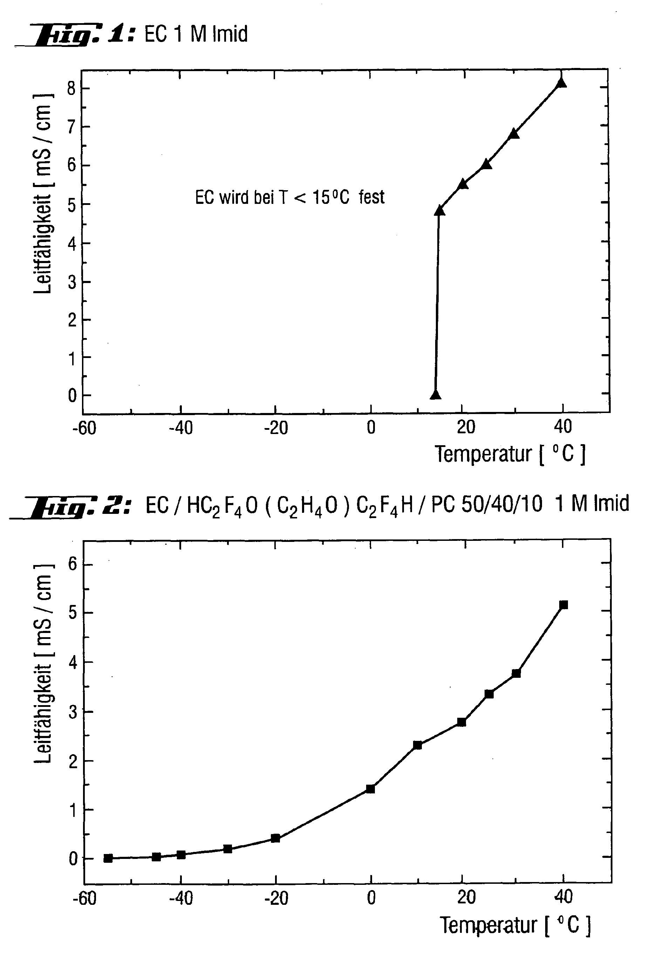

Die Figuren 1 bis 6 zeigen die Leitfähigkeit als Funktion der Temperatur im Bereich von +40 bis circa -50 °C. Bei Lösungsmittelgemischen sind die Anteile der Komponenten in Volumenprozent angegeben. Das Lithiumleitsalz wurde jeweils in 1M-Konzentration verwendet.

Abkürzungen:
- EC:: Ethylencarbonat
- PC:: Propylencarbonat
- Imid:: Li⁺[N(SO₂CF₃)₂]⁻

Die Erfindung wird in den folgenden Beispielen noch näher erläutert.

### Ausführungsbeispiele

Zur Herstellung des Elektrolyten werden zuerst die verwendeten Lösungsmittelkomponenten wie folgt vorbereitet:

Ethylencarbonat (> 99 %, Firma Merck) wird im Ölpumpenvakuum destilliert (Siedepunkt 85 bis 95 °C) und über aktiviertem Molekularsieb (Firma Roth, Porenweite 4 Angström) bei 150 °C 3 Tage entwässert unter getrockneter Argonatmosphäre [Argon, 99,996 %, Firma AGA, wurde zunächst, um Sauerstoffspuren zu entfernen, bei 150 °C über mit Argon W5 (Gemisch aus 95 % Argon und 5 % Wasserstoff, technische Reinheit, Firma AGA) reduziertes Kupfer-(I)-oxid (Firma BASF) geleitet und anschließend über aktiviertem Molekularsieb getrocknet] bei 60 °C gelagert.

Propylencarbonat (purum, Firma Aldrich) wird im ölpumpenvakuum über eine 1,5 m lange, verspiegelte Füllkörperkolonne destilliert (Siedepunkt 64 bis 66 °C) und über aktiviertem Molekularsieb unter getrockneter Argonatmosphäre bei Raumtemperatur gelagert. Nach der Reinigung und Trocknung wird der Restwassergehalt der Lösungsmittel nach der Karl-Fischer-Methode (zum Beispiel mit dem automatischen Titriergerät Mitsubishi CA 05) bestimmt. Der Wassergehalt soll unter 10 ppm liegen.

Die fluorierte Lösungsmittelkomponente wird einige Tage über aktiviertem Molekularsieb unter getrockneter Argonatmosphäre bei Raumtemperatur getrocknet.

Die Herstellung der Elektrolytlösungen findet mit der sogenannten Schlenktechnik im getrockneten Argonstrom statt, wobei die verwendeten Glasgeräte mit Schutzgasanschluß vor Gebrauch in der entleuchteten Bunsenbrennerflamme unter mehrmaligem Wechsel von Argonspülung und Ölpumpenvakuumsog von anhaftender Feuchtigkeit befreit werden.

### Beispiel 1

Herstellung eines Sicherheitsbatterieelektrolyten auf der Basis von Ethylencarbonat als filmbildende Komponente in Lithiumionen-Batterien.

Zu 50 Vol.-% Ethylencarbonat und 10 Vol.-% Propylencarbonat werden 40 Vol.-% Monoglykol-bis-tetrafluorethylether (HC₂F₄OCH₂CH₂OC₂F₄H) gegeben. Dieses Lösungsmittelgemisch wird unter Rühren zu 287,1 g (1 mol) Lithium-bis-(trifluormethansulfon)-imid [LiN(CF₃SO₂)₂, > 99,5 %, Firma 3M Company, 4 Tage im Hochvakuum bei 110 °C getrocknet] zugegeben und auf 1 Liter aufgefüllt. Der so hergestellte Elektrolyt besteht aus 50 Vol.-% Ethylencarbonat, 40 Vol.-% Monoglykol-bis-tetrafluorethylether (HC₂F₄-OC₂H₄-OC₂F₄H) und 10 Vol.-% Propylencarbonat und ist 1 M an LiN(CF₃SO₂)₂. Der Elektrolyt zeichnet sich durch ein günstiges Tieftemperaturverhalten bis -50 °C ohne ein Auskristallisieren der Ethylencarbonat-Komponente bei guter Leitfähigkeit aus (Figur 2), ist in einem weiten "elektrochemischen Fenster" stabil, verhält sich günstig bei der Intercalation von Lithium in Kohlenstoffen und ist extrem schwer entzündlich. Eine Lösung des Imids in Ethylencarbonat ohne Fluorether-Zusatz ist für niedrige Temperaturen ungeeignet (siehe Figur 1).

### Beispiel 2

Herstellung eines Sicherheitsbatterieelektrolyten auf der Basis von Propylencarbonat mit Lithium-bis-(trifluormethansulfon)-imid [LiN(CF₃SO₂)₂] als Leitsalz.

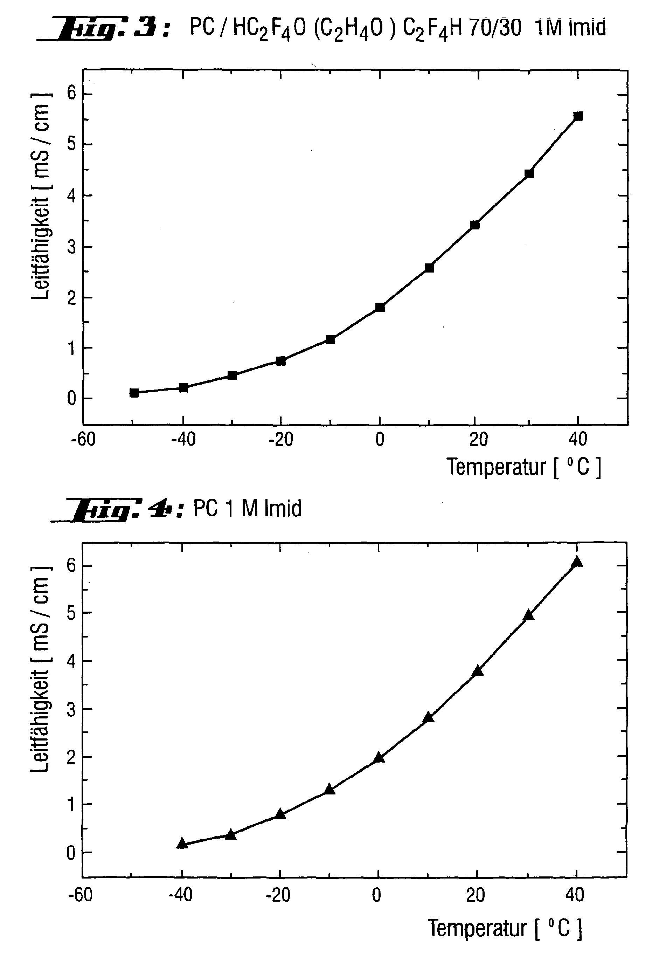

Zu 70 Vol.-% Propylencarbonat werden 30 Vol.-% Monoglykol-bis-tetrafluorethylether (HC₂F₄OCH₂CH₂OC₂F₄H) gegeben. Dieses Lösungsmittelgemisch wird unter Rühren zu 287,1 g (1 mol) Lithium-bis-(trifluormethansulfon)-imid [LiN(CF₃SO₂)₂, > 99,5 %, Firma 3M Company, 4 Tage im Hochvakuum bei 110 °C getrocknet] zugegeben und auf 1 Liter aufgefüllt. Der hergestellte Elektrolyt besteht aus 70 Vol.-% Propylencarbonat, 30 Vol.-% Monoglykol-bis-tetrafluorethylether (HC₂F₄OC₂H₄OC₂F₄H) und ist 1 M an Imid [LiN(CF₃SO₂)₂]. Der Elektrolyt zeichnet sich durch ein günstiges Tieftemperaturverhalten bis -50 °C bei guter Leitfähigkeit aus (Figur 3), ist in einem weiten "elektrochemischen Fenster" stabil, verhält sich günstig bei der Intercalation von Lithium in Kohlenstoffen und ist extrem schwer entzündlich. Die Lösungsmittel sind in beliebigen Verhältnissen miteinander mischbar [Figur 4 zeigt die Temperaturabhängigkeit der Leitfähigkeit eines Elektrolyten, der aus 30 Vol.-% Propylencarbonat und 70 Vol.-% Monoglykol-bis-tetrafluorethylether (HC₂F₄OCH₂CH₂OC₂F₄H) besteht und 1 M an Lithium-bis-(trifluormethansulfon)-imid [LiN(CF₃SO₂)₂ ist].

### Beispiel 3

Herstellung eines Sicherheitsbatterieelektrolyten auf der Basis von Propylencarbonat mit Lithiumhexafluorophosphat (LiPF₆) als Leitsalz.

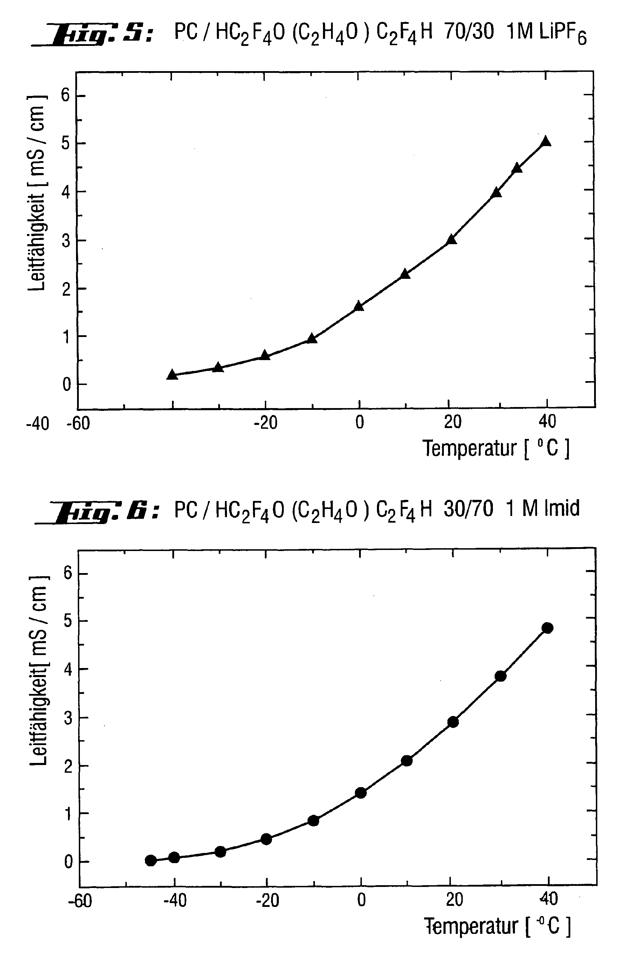

Zu 70 Vol.-% Propylencarbonat werden 30 Vol.-% Monoglykol-bis-tetrafluorethylether (HC₂F₄OCH₂CH₂OC₂F₄H) gegeben. Dieses Lösungsmittelgemisch wird unter Rühren zu 151,9 g (1 mol) Lithiumhexafluorophosphat (LiPF₆, > 99,9 %, Firma Merck beziehungsweise Hashimoto, kann ohne vorherige Trocknung eingesetzt werden) gegeben und auf 1 Liter aufgefüllt. Der hergestellte Elektrolyt besteht aus 70 Vol.-% Propylencarbonat, 30 Vol.-% Monoglykol-bis-tetrafluorethylether (HC₂F₄OC₂H₄OC₂F₄H) und ist 1 M an Lithiumhexafluorophosphat. Der Elektrolyt zeichnet sich durch ein günstiges Tieftemperaturverhalten bis -50 °C bei guter Leitfähigkeit aus (Figur 5), ist in einem weiten "elektrochemischen Fenster" stabil, verhält sich günstig bei der Intercalation von Lithium in Kohlenstoffen und ist extrem schwer entzündlich.

### Beispiel 4

Aus 30 Vol.-% Propylencarbonat und 70 Vol.-% Monoglykol-bis-tetrafluorethylether sowie dem bereits genannten Imid wird eine 1M-Lösung hergestellt. Leitfähigkeitsmessung siehe Figur 6.

## Patentansprüche

1. Elektrolytsystem für Lithiumbatterien mit erhöhter Sicherheit, **dadurch gekennzeichnet, daß** das Elektrolytsystem der Batterie mindestens einen teilfluorierten Ether der Formel (I)
RO-[(CH₂)ₘO]ₙ-CF₂-CFH-X (I)
worin
R eine geradkettige Alkylgruppe mit 1 bis 10 C-Atomen oder eine verzweigte Alkylgruppe mit 3 bis 10 C-Atomen,
X Fluor, Chlor oder eine Perfluoralkylgruppe mit 1 bis 6 C-Atomen ist, welche auch Ethersauerstoff enthalten kann,
m eine Zahl von 2 bis 6 und
n eine Zahl von 1 bis 8 ist,
und/oder der Formel (II)
X-CFH-CF₂O-[(CH₂)ₘO]ₙ-CF₂-CFH-X (II)
worin
X, m und n die obengenannten Bedeutungen haben,
in einer Menge von 5-70 Vol.-% und gegebenenfalls ein tertiäres aliphatisches Amin enthält.

2. Elektrolytsystem nach Anspruch 1, **dadurch gekennzeichnet, daß** in den Formeln (I) und (II) X Fluor oder Trifluormethyl ist.

3. Elektrolytsystem nach Anspruch 1 oder 2, **dadurch gekennzeichnet, daß** in Formel (I) R eine Methylgruppe, X Fluor, m 2 und n 1 bis 3 ist sowie in Formel (II) X Fluor, m 2 und n 1 bis 3 bedeutet.

4. Elektrolytsystem nach einem oder mehreren der Ansprüche 1 bis 3, **dadurch gekennzeichnet, daß** der Gehalt von Ethern der Formeln (I) und/oder (II) 20 bis 50 Vol.-%, des gesamten Elektrolytsystems beträgt.

5. Elektrolytsystem nach Anspruch 1, **dadurch gekennzeichnet, daß** neben mindestens einem Ether der Formeln (I) und/oder (II) Ethylencarbonat und/oder Propylencarbonat der Batterie zugesetzt wird.

6. Elektrolytsystem gemäß Anspruch 1, **dadurch gekennzeichnet, daß** zur Stabilisierung von Ethern der Formel (I) und (II) ein tertiäres, aliphatisches Amin verwendet wird, welches einen Siedepunkt von mindestens 100 °C bei Normaldruck aufweist und mit 0,1 bis 1,0 Gew.-% in bezug auf den fluorhaltigen Ether verwendet wird.

7. Sekundäre Lithiumbatterie mit erhöhter Sicherheit, **dadurch gekennzeichnet, daß** die Batterie ein Elektrolytsystem nach einem oder mehreren der Ansprüche 1 bis 6 enthält.

## Claims

1. An elektrolyte system for lithium batteries with increased safety **characterized in that** the electrolyte system of the battery contains at least a partially fluorinated ether of the formula (I)
RO-[(CH₂)ₘO]ₙ-CF₂-CFH-X (I)
wherein
R is a straight-chain alkyl group with one to ten C atoms or a branched alkyl group with three to ten C atoms,
X is fluorine, chlorine or a perfluoroalkyl group with one to six C atoms which may also contain ether oxygen,
m is a number from 2 to 6 and
n is a number from 1 to 8,
and/or of the formula (II)
X-CFH-CF₂O-[(CH₂)ₘO]ₙ-CF₂-CFH-X (II)
wherein
X, m and n have the meaning as mentioned above,
contain the constituents as above in a percentage of 5 - 70 % by volume and may contain a tertiary aliphatic amine.

2. The electrolyte system as claimed in claim 1 **characterized in that** X is fluorine or trifluoromethyl in the formulas (1) and (II).

3. The electrolyte system as claimed in claim 1 or 2 **characterized in that** R means a methyl group, X means fluorine, m is a number of 2 and n is a number from 1 to 3 in formula (I) as well as X means fluorine, m is a number of 2 and n is a number from 1 to 3 in formula (II).

4. The electrolyte system as claimed in one or several of claims 1 to 3 **characterized in that** the percentage of ethers in the formulas (I) and/or (II) is 20 to 50 % by volume of the whole electrolyte system.

5. The electrolyte system as claimed in claim 1 **characterized in that**, apart from at least one ether of the formulas (I) and/or (II), ethylene carbonate and/or propylene carbonate is added to the battery.

6. The electrolyte system as claimed in claim 1 **characterized in that**, in order to stabilize the ethers of formulas (I) and (II), a tertiary aliphatic amine is used, which has a boiling point of at least 100 °C at standard pressure and a percentage of 0.1 to 1.0 % by weight relating to the fluorine-containing ether.

7. A secondary lithium battery with increased safety **characterized in that** the battery contains an electrolyte system as claimed in one or several of claims 1 to 6.

## Revendications

1. Système électrolytique pour batteries au lithium à sécurité élevée, **caractérisé par le fait que** le système électrolytique de la batterie contient au moins un éther partiellement fluoré de la formule (I)
RO-[(CH₂)ₘO]ₙ-CF₂-CFH-X (I)
dans laquelle
R est un groupe alkyle linéaire de 1 à 10 atomes de C ou un groupe alkyle ramifié de 3 à 10 atomes de C,
X est du fluor, du chlore ou un groupe alkyle perfluorique avec 1 jusqu'à 6 atomes de C, lequel peut aussi contenir de l'oxygène d'éther,
m est un chiffre de 2 à 6 et
n est un chiffre de 1 à 8,
et/ou de la formule (II)
X-CFH-CF₂O-[(CH₂)ₘO]ₙ-CF₂-CFH-X (II)
dans laquelle
X, m et n ont la même signification que ci-dessus, dans une quantité de 5 à 70 % en volume et contenant éventuellement une amine aliphatique tertiaire.

2. Système électrolytique selon la revendication 1 **caractérisé par le fait que** dans les formules (I) et (II) il y a X comme fluor ou comme trifluorométhyle.

3. Système électrolytique selon les revendications 1 ou 2, **caractérisé par le fait que** dans la formule (I) R signifie un groupe méthyle, X du fluor, m 2 et n de 1 à 3 et dans la formule (II) X du fluor, m 2 et n de 1 à 3.

4. Système électrolytique selon un ou plusieurs des revendications de 1 à 3, **caractérisé par le fait que** la teneur en éthers des formules (I) et/ou (II) est de 20 à 50 % en volume du système électrolytique total.

5. Système électrolytique selon la revendication 1 **caractérisé par le fait que** sont ajoutés à la batterie à côté au moins d'un éther de la formule (I) et/ou (II) du carbonate d'éthylène et/ou du carbonate de propylène.

6. Système électrolytique selon la revendication 1 **caractérisé par le fait que** pour stabiliser les éthers des formules (I)et(II) on utilise une amine aliphatique tertiaire, laquelle présente un point d'ébullition de 100 °C au moins sous pression normale et sera utilisée avec de 0,1 à 1,0 % en poids par rapport à l'éther contenant du fluor.

7. Batterie secondaire au lithium à sécurité élevée **caractérisée par le fait que** la batterie contient un système électrolytique d'après une ou plusieurs des revendications de 1 jusqu'à 6.
